Europäisches Patentamt

European Patent Office

Office européen des brevets

(11) Numéro de publication: **0 074 876**

**A1**

(12) # DEMANDE DE BREVET EUROPEEN

(21) Numéro de dépôt: **82401604.2**

(22) Date de dépôt: **30.08.82**

(51) Int. Cl.³: **B 23 Q 3/10**

(30) Priorité: **14.09.81 FR 8117334**

(43) Date de publication de la demande:
**23.03.83 Bulletin 83/12**

(84) Etats contractants désignés:
**AT BE CH DE GB IT LI NL SE**

(71) Demandeur: **AUTOMATIQUE INDUSTRIELLE**
**8 bis, rue Michelet**
**F-92150 Suresnes(FR)**

(72) Inventeur: **Blatrix, Jean-Pierre M. M.**
**17, rue Halphen**
**F-92700 Colombes(FR)**

(74) Mandataire: **Durand, Yves Armand Louis et al,**
**Cabinet Z. Weinstein 20, Avenue de Friedland**
**F-75008 Paris(FR)**

(54) **Dispositif universel de supportage et de bridage d'une pièce.**

(57) La présente invention concerne un dispositif universel de supportage et de bridage d'une pièce.

Ce dispositif comprend essentiellement une couronne (10) qui peut être fixée sur une plaque de base et dans laquelle sont emboîtés une pluralité de disques (6, 7, 8) agencés concentriquement les uns dans les autres à l'exception d'un disque (9) qui est excentré par rapport aux autres, les disques (7, 8, 9) comportant chacun une colonne (5) de sorte que les colonnes soient ainsi aptes à couvrir tous les points d'une surface donnée quelconque par rotation relative des disques (6, 7, 8 et 9).

Le dispositif de l'invention permet le supportage et le bridage de pièces à usiner ayant une forme quelconque.

FIG.1

EP 0 074 876 A1

-1-

"Dispositif universel de supportage et de bridage
d'une pièce".-

La présente invention a essentiellement pour objet un
dispositif universel de supportage et de bridage d'une
pièce quelconque en vue de son usinage par exemple.

On a déjà proposé des moyens de supportage et de bridage temporaires de pièces pour permettre leur usinage.
Ces moyens connus sont généralement constitués par une
plaque de base usinée le plus souvent à la demande
et sur laquelle sont montées des colonnes d'appui
pour caler la pièce en hauteur et dans le plan horizontal, ainsi que par des systèmes de bridage de la
pièce sur les colonnes, ces systèmes étant actionnés
par des moyens appropriés mécaniques, pneumatiques,
hydrauliques, ou analogues.

Toutefois, les moyens précités étaient spécifiques
à une pièce bien déterminée et ne permettaient pas
une adaptation à une pièce de forme différente, ce
qui, comme on le comprend, représentait des inconvénients notables sur le plan du coût et de la maind'oeuvre, dans les usines et ateliers où l'on doit
traiter et usiner des séries de pièces présentant des
formes et des dimensions différentes. En effet,
jusqu'à présent, il convenait à chaque fois d'adapter
les moyens de supportage et de bridage à la nouvelle pièce que l'on voulait usiner, ce qui représentait un travail supplémentaire.

La présente invention a pour but notamment de remédier aux inconvénients ci-dessus en proposant un nouveau dispositif de supportage et de bridage adaptable immédiatement à une pièce de forme quelconque et qui peut avantageusement être utilisé par exemple dans un atelier flexible où l'on fabrique des prototypes ou des petites séries et dont la vocation est de pouvoir usiner sur une palette ou plaque de base standard des pièces de formes différentes.

A cet effet, l'invention propose un dispositif universel de supportage et de bridage temporaire d'une pièce quelconque en vue de son usinage par exemple, et du type comprenant une plaque de base sur laquelle sont montées des colonnes ou analogues de supportage de la pièce ainsi que des moyens de bridage et de débridage de cette pièce, caractérisé en ce que lesdites colonnes sont respectivement solidaires de disques de préférence emboîtés et qui sont relativement mobiles en rotation sur ladite plaque de base de façon que lesdites colonnes soient aptes à couvrir tous les points d'une surface donnée quelconque et à former ainsi un plan de supportage adaptable à une forme de pièce quelconque.

Ainsi, quelle que soit la forme de la surface de la pièce que l'on veut usiner, on sera toujours certain de pouvoir supporter et brider cette pièce de manière correcte avec le dispositif universel de supportage et de bridage conforme à la présente invention.

Suivant une autre caractéristique de ce dispositif, les disques précités sont agencés concentriquement les uns dans les autres, à l'exception d'au moins l'un d'entre eux qui est excentré par rapport aux autres.

Selon encore une autre caractéristique, le disque excentré précité est pourvu d'au moins une colonne qui passe par le centre de rotation commun des autres disques.

On précisera encore ici que, suivant un mode de réalisation préféré, le disque excentré précité tourne dans un premier disque qui est dépourvu de colonne.

Autour de ce premier disque, sont agencés concentriquement et successivement un deuxième et un troisième disque portant respectivement au moins une colonne.

Suivant une autre caractéristique de l'invention, tous les disques précités sont insérés dans une couronne ou analogue extérieurement concentrique au troisième disque précité et solidaire de la plaque de base.

Selon encore une autre caractéristique du dispositif de l'invention, les surfaces coopérantes d'emboîtement des disques et de la couronne sont coniques.

Ainsi, du fait de leur conicité, les divers disques seront correctement appliqués sur la plaque de base, ce qui garantit une excellente précision, et de plus, il n'y aura aucune difficulté lors du démontage complet de l'ensemble des disques dont la conicité interdit tout coincement.

On notera encore ici que chaque disque comporte, suivant l'invention, une fente radiale afin de pouvoir le rendre extensible et solidaire de la plaque de base au moyen d'une vis conique ou autre moyen analogue inséré dans ladite fente.

Suivant encore une autre caractéristique de l'invention, la couronne précitée est pourvue d'une rainure circulaire dans laquelle sont fixés de manière ajustable autour de la pièce, les moyens de bridage et de débridage précités.

Chaque moyen de bridage et de débridage est essentiellement constitué d'un jeu de leviers sollicités par des ressorts pour prendre appui sur la pièce supportée par les colonnes précitées, l'un de ces leviers faisant saillie vers l'extérieur de la couronne pour prendre appui sur le dessous d'une plaque de débridage évidée solidaire de la plaque de base précitée.

Suivant un mode de réalisation préféré, la plaque de débridage précitée est montée coulissante sur des montants munis de ressorts et solidaires de la plaque de base, et cette plaque de débridage est actionnable par un portique ou analogue pourvu de doigts mobiles.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en plan de dessus du système de supportage à disques emboîtés.

La figure 2 est une vue en coupe faite sensiblement suivant la ligne II-II de la figure 1; et

La figure 3 est une vue en élévation avec arrachements et coupes partielles de l'ensemble du dispositif de supportage et de bridage conforme à l'invention.

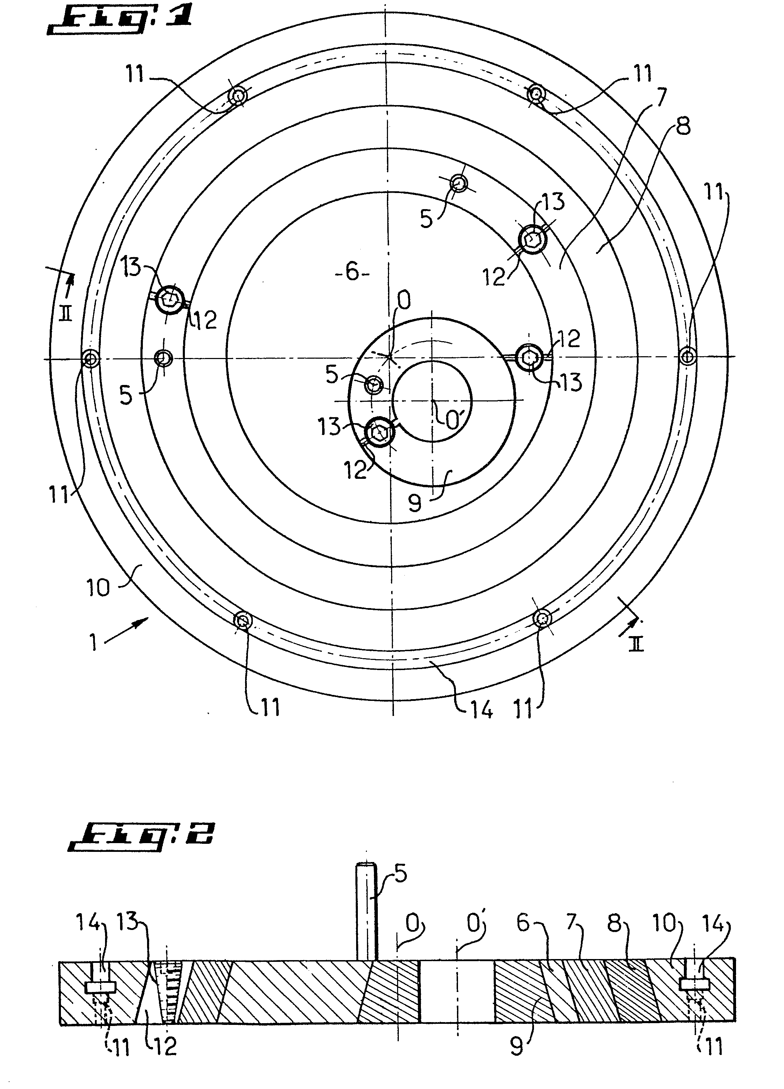

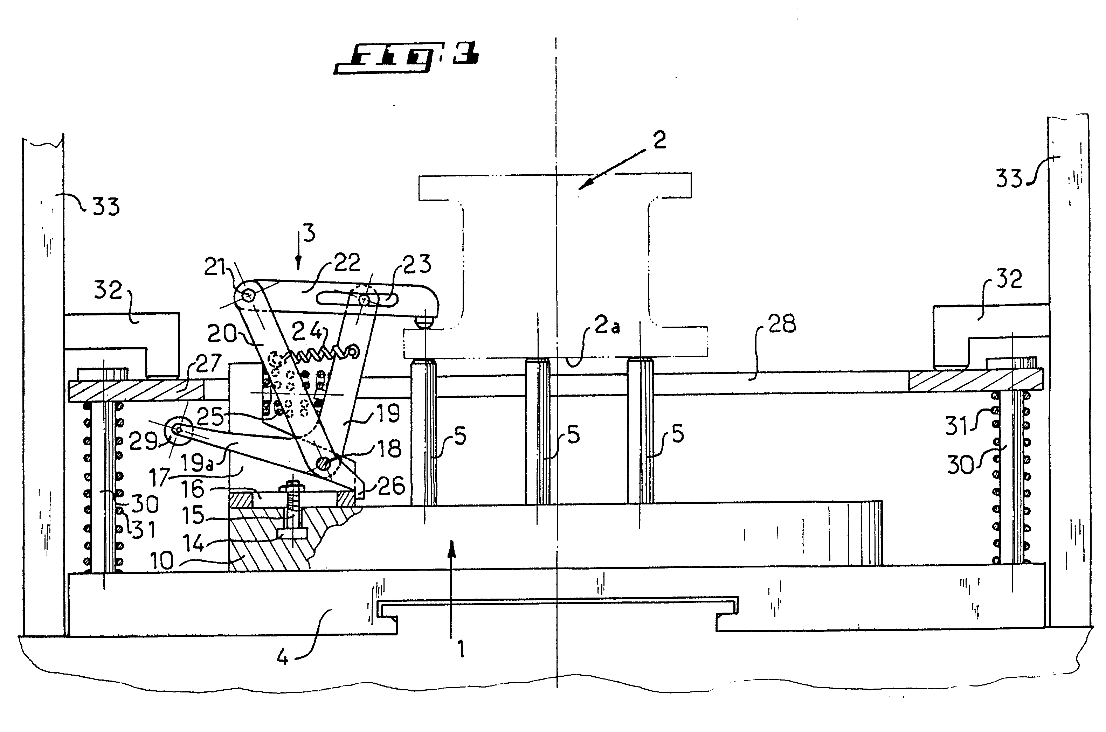

En se reportant aux dessins annexés, on voit qu'un système de supportage et de bridage selon l'invention comprend essentiellement un ensemble 1 de supportage d'une pièce à usiner quelconque 2 et plusieurs dispositifs identiques de bridage de la pièce 2, tels que celui montré en 3 sur la figure 3. Comme on le voit sur cette figure, l'ensemble de supportage 1 est disposé sur une plaque de base ou palette 4 de façon à pouvoir transporter facilement l'ensemble 1 d'un poste à un autre en vue de réaliser diverses opérations d'usinage sur la pièce 2.

Suivant l'exemple de réalisation représenté, et comme on le voit mieux sur les figures 1 et 2, l'ensemble de supportage 1 se compose d'une pluralité de disques ou anneaux relativement mobiles en rotation sur la plaque de base 4 et portant, au moins pour certains d'entre eux, une colonne 5 de supportage de la pièce 2. Les colonnes 5, comme on va le décrire maintenant, sont au nombre de trois et leur rotation relative permet de couvrir avec précision tous les points d'une surface donnée quelconque 2a à supporter.

L'ensemble de supportage 1 se compose essentiellement de quatre disques emboîtables qui sont agencés concentriquement les uns dans les autres à l'exception de l'un d'entre eux qui est excentré par rapport aux autres. Plus précisément, l'ensemble 1 est constitué par un premier disque 6 qui ne porte pas de colonne 5, par un deuxième disque 7 qui porte une colonne 5 et par un troisième disque 8 qui lui aussi porte une colonne 5, ces trois disques 6, 7 et 8 étant concentriques et librement déplaçables autour d'un centre

commun O. Un disque ou anneau excentré 9 est emboîté dans le premier disque 6 et peut tourner librement dans celui-ci autour du point O'. Ce disque 9 excentré par rapport aux autres porte une colonne 5 qui par rotation, passe par le centre de rotation O des trois disques concentriques 6, 7 et 8, comme on le voit bien sur la figure 1. Ceci constitue une condition essentielle pour que les trois colonnes 5 associées respectivement aux disques 7, 8 et 9, soient aptes à supporter une surface quelconque, c'est-à-dire une pièce 2 de forme quelconque.

Les disques 6, 7, 8 et 9 sont tous insérés ou emboîtés dans une couronne 10 extérieurement concentrique au troisième disque 8. La couronne 10 peut être fixée sur la plaque de base 4 au moyen de vis ou analogues passant dans des orifices montrés schématiquement en 11 sur les figures 1 et 2.

Comme il apparaît clairement sur la figure 2, les surfaces coopérantes d'emboîtement des disques 6, 7, 8 et 9, et de la couronne 10 sont coniques, ce qui permet un emboîtement précis de tous ces éléments tout en assurant la rotation relative libre des disques dans la couronne 10.

Chaque disque, 6, 7, 8 et 9 comporte une fente 12 dans laquelle peut être inséré un élément approprié quelconque permettant l'extension des disques, ce moyen pouvant être par exemple une vis conique 13.

La mise en oeuvre de l'ensemble de supportage 1 est la suivante. Par rotation relative des disques 6, 7, 8 et 9 on adapte tout d'abord les colonnes 5 aux côtés de la surface 2a de la pièce 2 à usiner. Puis en agissant sur les vis 13, on immobilise les disques sur la plaque de base 4 en commençant de préférence par le disque 8 qui est le plus grand. En d'autres termes, l'extension radiale des disques ainsi que leur conicité permet leur application sur la palette 4 avec une grande précision. En outre, lorsqu'on veut démonter l'ensemble des disques 6, 7, 8 et 9 après avoir désolidarisé la couronne 10 de la plaque 4, on ne se trouvera pas en présence d'un coincement des disques en raison de leur conicité.

La couronne 10 comporte une rainure circulaire 14, présentant par exemple un profil en T comme on le voit bien sur la figure 2, et qui, suivant l'exemple de réalisation représenté, permet l'introduction et le vissage des vis au travers des orifices ou alésages 11 pour fixer la couronne 10 sur la plaque de base 4. Dans cette rainure en T 14 sont fixés les dispositifs 3 de bridage et de débridage de la pièce 2, lesquels seront maintenant décrits en se reportant à la figure 3.

Chaque dispositif 3 est fixé sur la couronne 10 par des boulons ou analogues 15 et ce par l'intermédiaire d'une lumière oblongue 16 permettant une orientation et un déplacement approprié du dispositif 3 par rapport à la pièce 2. Le dispositif 3 comprend un support 17 présentant sensiblement une forme d'équerre et sur lequel sont articulés en 18 deux bras formant leviers et à savoir un premier levier 19 et un deuxième levier 10. L'extrémité 21 du deuxième levier est articulée à l'extrémité d'un élément d'appui 22 qui comporte une lumière oblongue 23 dans laquelle peut se débattre l'extrémité du premier levier 19. Un ressort 24 est prévu entre les deux leviers 19 et 20, et un autre ressort 25 est agencé entre le support 17 et le premier levier 19 comme on le voit sur la figure 3. On a montré en 26 l'autre extrémité du levier 20 qui forme à cet endroit une butée de fin de course en prenant appui sur le support 17.

Conformément à l'invention, le premier levier 19 présente une forme générale d'équerre dont une partie 19a fait saillie vers l'extérieur de la couronne 10 pour venir en dessous d'une plaque 27 de débridage. Cette plaque 27 est aux dimensions extérieures de la palette 4 et est évidée en son centre, comme on l'a montré en 28 sur la figure 3, de façon à permettre le passage sur les brides 3 tout en couvrant les éléments en saillie 19a qui portent à leur extrémité un galet 29 ou autre moyen de roulement analogue.

La plaque de débridage 27 est montée coulissante le long de montants ou analogues 30 solidaires de la palette 4 et pourvus de ressorts 31 sollicitant vers le haut ladite plaque 27. La descente de cette plaque peut être commandée par exemple par des doigts ou analogues 32 montés mobiles le long d'un portique que l'on a montré très schématiquement en 33.

Le fonctionnement du dispositif de bridage et de débridage 3 se déduit immédiatement de la description qui précède. Tant que le bras 19a n'est pas sollicité par la plaque de débridage 27, l'élément d'appui 22 serre la pièce 2 sur les colonnes 5 de supportage, comme cela est bien visible sur la figure 3. Pour débrider cette pièce, on commande les doigts mobiles 32 pour pousser vers le bas la plaque de débridage 27, ce qui actionne le bras 19a du levier 19. Dès lors, le levier 19 pivote vers la gauche autour du point 18 ce qui, comme on le comprend, provoque le soulèvement de l'élément d'appui 22 et par conséquent le débridage de la pièce 2. Et, lorsque l'action sur la plaque de débridage 27 sera relâchée, l'élément d'appui 22 reviendra automatiquement en appui sur une autre pièce, sous l'effet de l'action du ressort 25. Il serait bien sûr possible, sans sortir du cadre de l'invention, de prévoir un nombre et une forme de leviers et ressorts autres que ceux qui sont représentés.

On a donc réalisé suivant l'invention un dispositif universel de supportage et de bridage d'une pièce quelconque, qui présente toutes les qualités de simplicité et de fiabilité requises et qui trouve une application particulièrement avantageuse dans les ateliers flexibles.

Bien entendu, l'invention n'est nullement limitée au mode de réalisation décrit et illustré qui n'a été donné qu'à titre d'exemple. C'est ainsi que les trois colonnes mobiles 11 peuvent être d'un type quelconque et sont éventuellement interchangeables et réglables en hauteur. Il en est de même en ce qui concerne les variantes possibles pour le système de bridage proprement dit 3, comme on l'a dit précédemment. Egalement, on pourrait envisager que le dispositif de l'invention comporte plus d'un disque excentré par rapport aux autres, et que la plaque de débridage 27 soit actionnée par des moyens autres que les doigts 32.

C'est dire que l'invention comprend tous les équivalents techniques des moyens décrits ainsi que leurs combinaisons si celles-ci sont effectuées suivant son esprit et mises en oeuvre dans le cadre de la protection revendiquée ci-après.

Revendications

1.- Dispositif universel de supportage et de bridage temporaire d'une pièce quelconque en vue de son usinage par exemple, et du type comprenant une plaque de base sur laquelle sont montées de manière mobile et ajustable des colonnes ou analogues de supportage de la pièce ainsi que des moyens de bridage et de débridage de cette pièce, caractérisé en ce que lesdites colonnes sont respectivement solidaires de disques de préférence emboîtés et qui sont relativement mobiles en rotation sur ladite plaque de base de façon que lesdites colonnes soient aptes à couvrir tous les points d'une surface donnée quelconque.

2.- Dispositif selon la revendication 1, caractérisé en ce que les disques précités sont agencés concentriquement les uns dans les autres à l'exception d'au moins l'un d'entre eux qui est excentré par rapport aux autres.

3.- Dispositif selon la revendication 1 ou 2, caractérisé en ce que le disque excentré précité est pourvu d'une colonne qui passe par le centre de rotation commun des autres disques.

4.- Dispositif selon l'une des revendications 1 à 3, caractérisé en ce que le disque excentré précité tourne dans un premier disque qui est dépourvu de colonne.

5.- Dispositif selon l'une des revendications 1 à 4, caractérisé en ce qu'autour du premier disque précité sont agencés concentriquement et successivement un deuxième et un troisième disques portant respectivement une colonne.

6.- Dispositif selon l'une des revendications précédentes, caractérisé en ce que tous les disques précités sont insérés dans une couronne ou analogue extérieurement concentrique au troisième disque précité et solidaire de la plaque de base.

7.- Dispositif selon l'une des revendications précédentes, caractérisé en ce que les surfaces coopérantes d'emboîtement des disques et de la couronne sont coniques.

8.- Dispositif selon l'une des revendications précédentes, caractérisé en ce que chaque disque précité comporte une fente radiale afin de pouvoir le rendre extensible et solidaire de la plaque de base au moyen d'une vis conique ou autre moyen équivalent, inséré dans ladite fente.

9.- Dispositif selon la revendication 1, 6 ou 7, caractérisé en ce que la couronne précitée est pourvue d'une rainure circulaire dans laquelle sont fixés de manière ajustable autour de la pièce les moyens de bridage et de débridage précités.

10.- Dispositif selon l'une des revendications précédentes, caractérisé en ce que chaque moyen de bridage et de débridage précité est essentiellement constitué d'un jeu de leviers sollicités par des ressorts pour prendre appui sur la pièce supportée par les colonnes précitées, l'un de ces leviers faisant saillie vers l'extérieur de la couronne pour prendre appui sur le dessous d'une plaque de débridage évidée solidaire de la plaque de base précitée.

11.- Dispositif selon la revendication 10, caractérisé en ce que la plaque de débridage précitée est montée coulissante sur des montants solidaires de la plaque de base et munis de ressorts, et est actionnable par un portique ou analogue pourvu de doigts mobiles.

12.- Dispositif selon la revendication 10 ou 11, caractérisé en ce qu'un galet est prévu à l'extrémité du levier prenant appui sous la plaque de débridage précitée.

Fig. 1

0074876

Fig. 2

Fig. 3

0074876

2/2

Office européen
des brevets

**RAPPORT DE RECHERCHE EUROPEENNE**

**0074876**
Numéro de la demande

EP 82 40 1604

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 23 Q 3/10 |
| A | DE-C- 393 965 (GRIESBERGER) | 1,2 | |
| | --- | | |
| A | FR-A- 520 778 (CLEMENT) | 1,2 | |
| | --- | | |
| A | DE-A-2 739 109 (FISCHER) | | |
| | --- | | |
| A | FR-A-2 403 161 (DART) | | |
| | --- | | |
| A | US-A-3 240 485 (OSER) | | |
| | --- | | |
| A | US-A-2 921 785 (UNDERHILL) | | |
| | ----- | | |

**DOMAINES TECHNIQUES RECHERCHES (Int. Cl. ³)**

B 23 Q 3/00
B 23 Q 1/00

Le présent rapport de recherche a été établi pour toutes les revendications

| Lieu de la recherche | Date d'achèvement de la recherche | Examinateur |
|---|---|---|
| LA HAYE | 20-12-1982 | BOGAERT F.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82